# EUROPEAN PATENT APPLICATION

(11) **EP 2 544 156 A1**
(43) Date of publication of application: **09.01.2013**
(21) Application number: 12167925.2
(22) Date of filing: 14.05.2012
(51) Int. Cl.: G07G 1/00, G01G 19/414

(54) **Optical code scanner**

(30) Priority: 06.07.2011 US 201113177247
(71) Applicant: NCR Corporation, Duluth, GA 30096 (US)
(72) Inventor: Adamec, Andrew, Buford, GA Georgia 30519 (US)
(74) Representative: MacLeod, Roderick William

(57) **Abstract**

An optical code scanner (145) is described. The scanner (145) comprises a scanning device (225) for reading an optical code presented to the optical code scanner (145) and detecting when an object (330) is located at a first predetermined location (320, 325, 400, or 405). The scanner (145) also comprises a computer processor (210) in communication with the scanning device (225) and executing software. The software is operable for (i) receiving from the scanning device (225) an indication that an object (330) is located at the first predetermined location (320, 325, 400, or 405), (ii) determining that an input criterion has been satisfied, and (iii) implementing an input request associated with the first predetermined location (320, 325, 400, or 405).

## Description

The present invention relates generally to an optical code scanner. More particularly, but not exclusively, the invention relates to an apparatus, method, and system for an operator interface implemented by the optical code scanner.

Any discussion of prior art throughout the specification should in no way be considered as an admission that such prior art is widely known or forms part of common general knowledge in the field.

Point of sale (POS) terminals are used throughout the retail industry to process purchase transactions. A POS terminal typically includes a personal computer (PC) core and chassis, one or more displays, a scanner and weigh scale, a cash drawer, a magnetic stripe reader (MSR), keyboard and a printer. The scanner and weigh scale has an operator interface that includes one or more buttons or keys that control functions such as selecting sounds or adjusting the volume of audible sounds used by the scanner to communicate with the operator. These buttons or keys add cost and are potential points of failure.

Therefore, there is a need for an optical code scanner and scale with an operator interface that eliminates or reduces the need for buttons or keys to communicate with the operator.

It is an object of the present invention to overcome or ameliorate at least one of the disadvantages of the prior art, or to provide a useful alternative.

Among its several aspects, the present invention recognizes a condition where an optical code scanner uses buttons and keys to receive operator input. The present invention partially or completely eliminates the need for the buttons and keys without diminishing the scanners ability to receive operator input.

In accordance with an aspect of the present invention, there is provided an optical code scanner including a weigh scale device and optical code scanning device. Using data from these devices, the scanner determines when an operator makes an input request, what request is being made, and processes the input request.

In a preferred embodiment, the optical code scanner comprises a weigh scale where the scale determines a value for the weight of an item placed on the scale or for a force applied to scale. The optical code scanner further comprises a scanning device where the device reads an optical code presented to the optical code scanner and detects when an object is located at a first predetermined location and a computer memory that stores software and data. It additionally comprises a computer processor in communication with the computer memory, the weigh scale, and the scanning device where the software, when executed by the processor, implements the features and functions of the optical code scanner including receiving from the weigh scale a value for a force applied to the scale, receiving from the scanning device an indication that an object is located in the first predetermined location, determining that a first input request has been made, and implementing the input request.

According to a first aspect of the invention there is provided an optical code scanner comprising: a scanning device for reading an optical code presented to the optical code scanner and detecting when an object is located at a first predetermined location; and a computer processor in communication with the scanning device and executing software for (i) receiving from the scanning device an indication that an object is located at the first predetermined location, (ii) determining that an input criterion has been satisfied, and (iii) implementing an input request associated with the first predetermined location.

It should be appreciated that the input request relates to data or commands selected by a user; the input request does not relate to an optical code on the object.

According to a second aspect of the invention there is provided a point of sale terminal including the optical code scanner of the first aspect of the invention.

According to a third aspect of the invention there is provided a method of operating an optical code scanner to implement an input request, the method comprising the steps of: (i) receiving from a scanning device an indication that an object is located at a first predetermined location, (ii) determining that an input criterion has been satisfied, and (iii) implementing the input request associated with the first predetermined location.

According to a fourth aspect of the invention there is provided an optical code scanner comprising: a weigh scale where the scale determines a value for the weight of an item placed on the scale or for a force applied to scale; a scanning device where the device reads an optical code presented to the optical code scanner and detects when an object is located at a first predetermined location; a computer memory that stores software and data; a computer processor in communication with the computer memory, the weigh scale, and the scanning device; and where the software, when executed by the processor, implements the features and functions of the optical code scanner including receiving from the weigh scale a value for a force applied to the scale, and receiving from the scanning device an indication that an object is located in the first predetermined location while the force is being applied, and determining that a first input request has been made after receiving the indication, and implementing the input request.

The weigh scale optionally includes a weigh plate which includes a first visual indicator where the first predetermined location is proximate to a first portion of the first visual indicator.

The first visual indicator optionally includes visual markings applied to the weigh plate.

The scanner optionally includes an image projector and the first visual indicator optionally includes visual symbols that are projected onto the weigh plate by the image projector.

The scanning device optionally further detects that the object is located in a second predetermined location which is proximate to a second portion of the first visual indicator.

Implementing the input request optionally includes receiving from the scanning device an indication that the object was detected in the second predetermined location while continuing to receive a value from the weigh scale indicating a force is still being applied to the weigh plate.

Implementing the input request optionally further includes modifying a volume parameter where the volume parameter determines the volume for audio sounds produced by the scanner and where the magnitude of the modification to the volume parameter is related to the distance between the first and second predetermined locations.

Implementing the input request optionally includes modifying a parameter of the scanner used by the processor to control a feature of the scanner.

The parameter of the scanner optionally determines the volume of audio signals generated by the scanner.

The optical code optionally includes a bar code.

According to a fifth aspect of the invention there is provided a method for inputting operator requests to an optical code scanner implemented by a computer in the optical code scanner, the method comprising: receiving a value from a weigh scale located in the scanner where the value indicates a non-zero force is applied to a weigh plate of the weigh scale; receiving first data from an optical code scanning device located in the scanner; determining from the received first data that an object is located at a first predetermined location; identifying an operator input request after determining an object is in the first predetermined location while a non-zero force is applied to the weigh scale; and implementing the identified operator input request.

Determining that an object is in the first predetermined location optionally includes determining that the object has no detected optical code.

Implementing the identified operator input request optionally includes determining that the object is in a second predetermined location.

The first predetermined location is optionally proximate to a first portion of a first visual indicator, and the second predetermined location is optionally proximate to a second portion of the first visual indicator, and the first visual indicator is optionally disposed on the weigh plate.

Implementing the identified input request optionally further includes modifying a volume parameter where the volume parameter determines the volume for audio sounds produced by the scanner and wherein the magnitude of the modification to the volume parameter is related to the distance between the first and second predetermined locations.

Implementing the identified input request optionally includes modifying a parameter that controls a feature or function of the scanner.

The method optionally further comprises sending commands to a projection device causing it to project one or more symbols onto the weigh plate of the weigh scale at a specific location.

According to a sixth aspect there is provided an optical code scanner comprising: a scanning device where the device reads an optical code presented to the optical code scanner and detects when an object is located at a first predetermined location; a computer memory that stores software and data; a computer processor in communication with the computer memory and the scanning device; and where the software, when executed by the processor, implements the features and functions of the optical code scanner including receiving from the scanning device an indication that an object is located in the first predetermined location and entering an operator input mode after determining the object is located in the first predetermined location for a sustained period of time.

According to a seventh aspect of the invention there is provided a point of sale terminal comprising: a point of sale computer; an operator display where the point of sale computer displays information on the display; a optical code scanner in communication with the point of sale computer where the scanner communicates information on optical codes read by the scanner and waits for forces or items placed on the scanner, the scanner comprising: a weigh scale where the scale determines a value for the weight of an item placed on the scale or for a force applied to scale; a scanning device where the device detects and reads an optical code presented to the optical code scanner and determines when an object is located at a first predetermined location; a computer memory that stores software and data; a computer processor in communication with the computer memory, the weigh scale, and the scanning device; and where the software, when executed by the processor, implements the features and functions of the optical code scanner including receiving from the weigh scale a value for a force applied to the scale, and receiving from the scanning device an indication that an object is located at the first predetermined location while the force is being applied, and determining that a first operator input request has been made after receiving the indication, and implementing the operator input request.

A more complete understanding of the present invention, as well as further features and advantages of the invention, will be apparent from the following detailed description and the accompanying drawings, given by way of example only, in which:

Fig. 1 is a high-level block diagram illustrating an exemplar embodiment of a point of sale system;

Fig. 2 is a high-level block diagram illustrating an exemplar embodiment of a scanner and scale apparatus;

Fig. 3 is a high-level drawing illustrating an exemplar embodiment of a scanner and scale apparatus;

Fig. 4 is a high-level drawing illustrating another exemplar embodiment of a scanner and scale apparatus;

Fig. 5 is a high-level flow chart depicting an exemplary method for detecting and processing a touch event to a scanner and scale apparatus; and

Fig. 6 is a high-level flow chart depicting an exemplary method for detecting and processing moving touch events to a scanner and scale apparatus.

In the following description, numerous details are set forth to provide an understanding of the claimed invention. However, it will be understood by those skilled in the art that the claimed invention may be practiced without these details and that numerous variations or modifications from the described embodiments are possible.

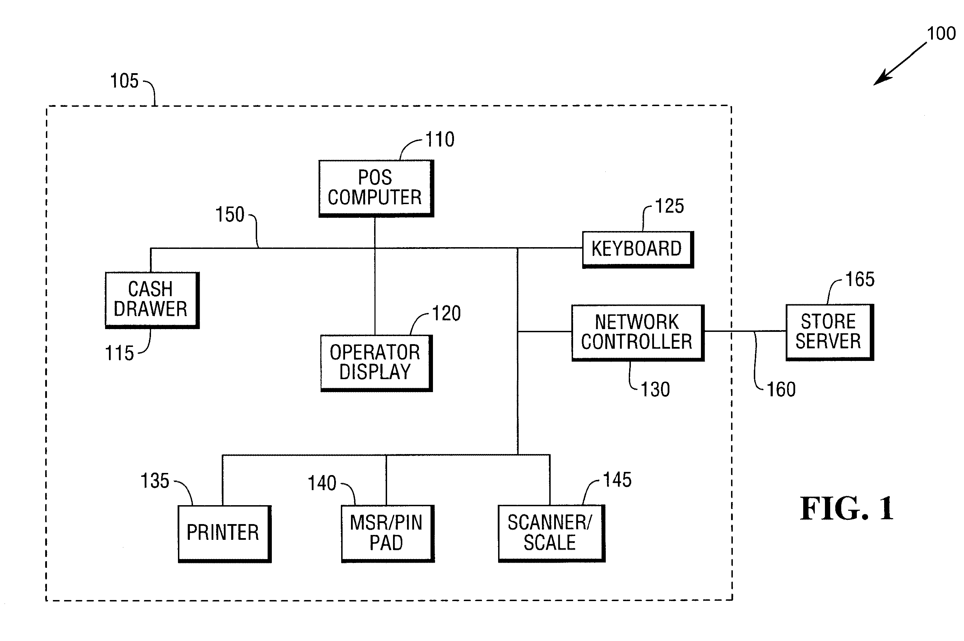

Referring to Fig. 1, there is provided a high-level diagram, in block form, illustrating an exemplar embodiment of a POS system 100. The POS system 100 includes one or more POS terminals 105 connected to a store server 165 over a computer data network 160. The store server 165 is a computer that provides resources and functions that are used by the one or more POS terminals 105. These resources can include a price lookup database and additional networks to communicate with other computers (both local and remote) to perform functions such as financial (credit/debit card) transactions.

The one or more POS terminals 105 connect to the store server 165 over the network 160 to send and receive data. In some embodiments, the network 160 uses physical cables to connect the POS terminal 105 to the store server 165 and in other embodiments, a wireless interface is used to connect the POS terminal 105 to the store server 165. Still other embodiments use a combination of physical and wireless connections.

The POS terminal 105 performs a number of functions including processing a purchase transaction. A purchase transaction is begun when one or more items are presented to the POS terminal 105 for identification. As each item is indentified, a price is determined. In some embodiments, the terminal 105 retrieves the price for an item from the price lookup database in store server 165. Some items are sold by weight so the item's weight must be determined before a price can be determined. The POS terminal 105 maintains information on all items presented including a total price for all items. The POS terminal 105 processes a payment for the items once all items have been presented and a total price is determined. The purchase transaction ends when payment for the presented items has been received or processed.

In the present embodiment, the POS terminal 105 includes a POS computer 110 that is in communication with and controls a cash drawer 115, an operator display 120, a keyboard 125, a network controller 130, a printer 135, an MSR/PIN pad 140, and a scanner and scale combination (scanner) 145. The POS computer 110 includes a processor, memory and interface circuitry (not shown). The processor communicates with the other elements of the POS terminal 105 over a bus 150. The processor executes software stored in the memory which causes the processor to control the elements of the POS terminal 105 and to implement the features and functions used to, among other things, conduct purchase transactions at the POS terminal 105.

It should be noted that while this embodiment includes a scanner and scale combination 145, it possible to have a scanner without the scale function. In an embodiment without a scale, the scanner determines when a location is touched, as will be further described below.

In the present embodiment, the POS terminal 105 is an assisted checkout terminal where an operator performs a checkout function for a customer. In other embodiments, the POS terminal 105 is a self-service checkout terminal and the customer performs the checkout function.

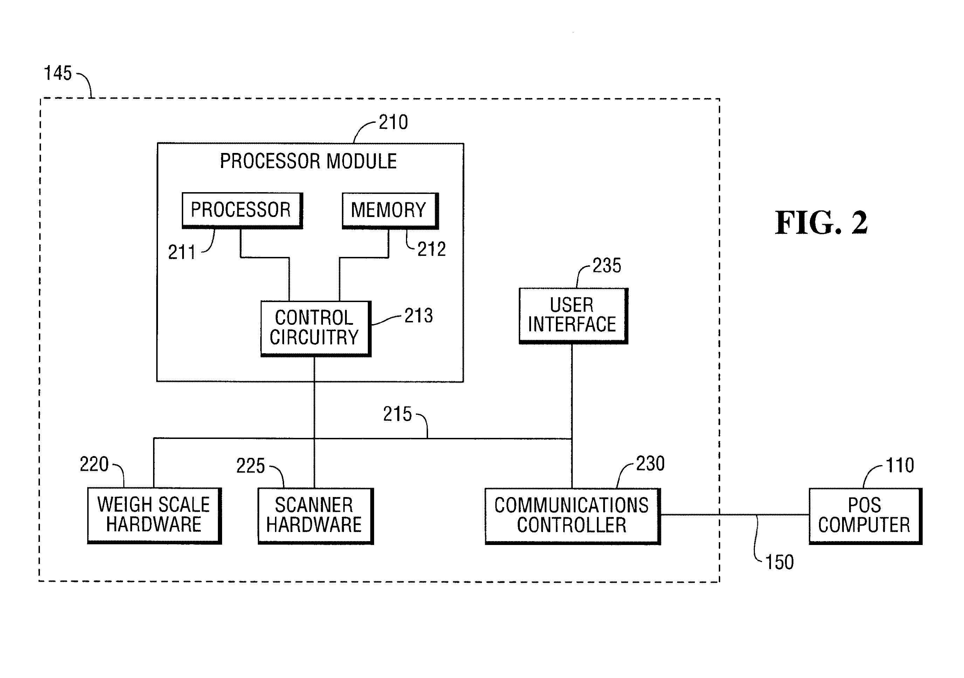

Referring to Fig. 2, there is provided a high-level diagram, in block form, illustrating an exemplar embodiment of the scanner and weigh scale 145 (also referred to as "the scanner"). The scanner 145 includes a processor module 210, weigh scale hardware 220, scanner hardware 225, a user interface 235, and a communications controller 230.

The processor module 210 includes a processor 211, a memory 212, and control circuitry 213. The control circuitry 213 supports communications between the processor 211 and the memory 212 and with a bus 215 for the processor 211 to communicate with the other devices that comprise the scanner 145. The memory 212 stores software and data. The processor 211 executes the software stored in the memory 212 which causes the processor 211 to control the devices of the scanner 145 and to provide the features and functions of the scanner 145. The processor 211, using the communications controller 230, communicates with the POS computer 110 over a communications path 150. In some embodiments, the communications path 150 is a bus based on the Universal Serial Bus (USB) standard. The software executed by the processor 211 also implements a user interface for the scanner 145 that both outputs information to an operator and receives information from the operator. The received information is in the form of requests or commands made by the operator to the scanner 145. The information includes requests to change parameters used to control the operation of the scanner 145 (e.g., volume control).

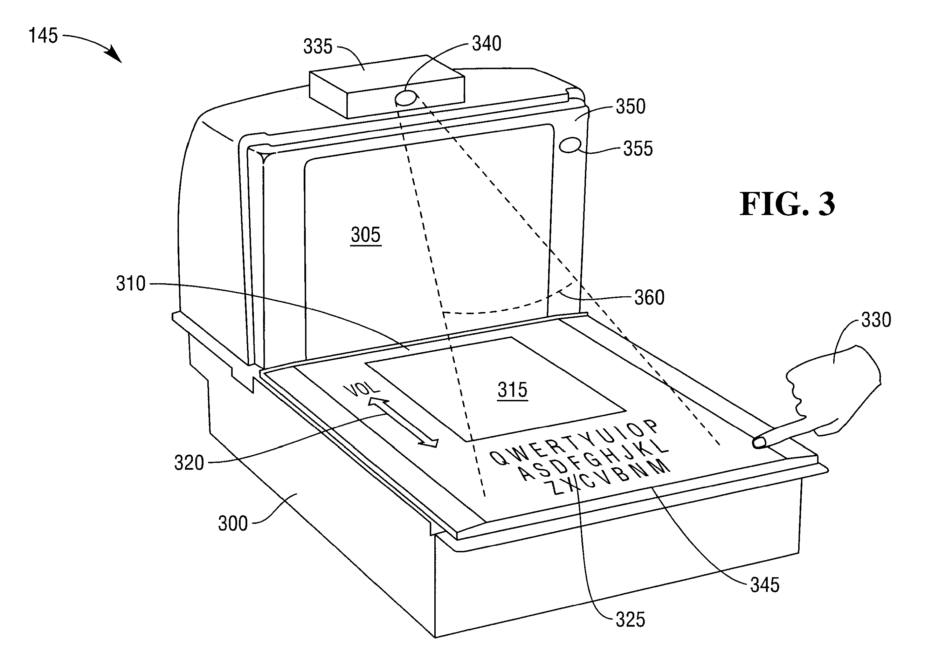

The weigh scale hardware 220 includes control and weighing hardware necessary to communicate with the processor 211 over the bus 215 and to measure a force applied to a weigh plate 310 (sometimes known as a top plate). The measured force can result from gravity acting on an object resting on the weigh plate (Fig. 3, 310) or it can result from a non-gravitation force being applied directly to weigh plate 310 (e.g., a person's finger pressing on the weigh plate 310). The weigh scale hardware 220 determines a value for the measured force and communicates the value to the processor 211 over the bus 215. In some embodiments, the measured force is represented in units of weight, such as pounds or grams. When used in a point of sale system, it is common practice to equate the force measured by the scale hardware 220 to the weight of an object resting on the weigh plate 310. While not entirely accurate, the terms force and weight are used interchangeably.

The weigh scale hardware 220 will perform a tare or zero function on command from the processor 211. A tare function causes the scale hardware 220 to measure the current force and to save this value as the zero force or zero weight. The zero force is the total gravitational force from all elements that are attached such that their gravitational forces are always a component of the force measured by the weigh scale hardware 220. The weigh plate 310 is one such element because its weight is always part of the measured force. Therefore, to determine only the value for an external force being applied to the weigh plate 310, the weigh scale hardware 220 first measures the total force and then subtracts the zero force from it. The difference is the value of just the external force being applied and is the value communicated to the processor 211. The difference can be referred as the non-zero force or non-zero weight.

The scanner hardware 225 includes hardware that identifies and reads an optical code presented to the scanner 145. In this embodiment, the optical code is a bar code but in other embodiments, the optical codes include text and symbols. In some embodiments, the scanner hardware 225 includes a laser scanner which identifies and reads the optical codes. In other embodiments, the scanner hardware 225 includes an image scanner which identifies and reads an optical code by processing an image captured by an image capture device. In still other embodiments, both a laser and image scanner are used in parallel to identify and read the optical codes. In addition to identifying and reading an optical code, both a laser and image scanner can also determine the location of an object within their field of view. This includes the ability to determine if the object is placed at predetermined location on the weigh plate 310.

The user interface 235 includes hardware needed to communicate information to and from an operator using the scanner 145. In some embodiments, the user interface 235 includes an audio speaker and one or more illumination devices such as an LED. These elements are used to signal one or more events such as a successful or unsuccessful scan of an item to the operator.

Turning now to Fig. 3, there is provided a high-level drawing illustrating an exemplar embodiment of the scanner and weigh scale 145. In the embodiment depicted in this figure, the scanner hardware 225 includes an imaging scanner which, among other functions, is used to determine if an operator is attempting to input information by touching (operator's finger) 330 the weigh plate 310 in predetermined locations.

The scanner 145 includes a housing 300 that protects and supports the elements of the scanner 145. The horizontal surface 345 of the scanner 145 includes the weigh plate 310 that is part of the weigh scale hardware 220. The weigh plate 310 includes a transparent horizontal scan window 315. The transparent window 315 is used by the scanner hardware 225 to view optical codes presented to the POS terminal 105 for reading. The housing 300 further includes a vertical surface 350 that includes a transparent vertical scan window 305. The transparent vertical scan window 305 is also used by the scanner hardware 225 to view optical codes presented to the POS terminal 105 for reading. The vertical surface 350 can also include one or more visual indicators 355 that are part of the user interface 235. Examples of visual indicators 355 are a power-on LED and a successful optical code read indicator LED.

The weigh plate 310 also includes visible symbols (320, 325). In the present embodiment, the symbols include the letters of the alphabet 325 arranged as they would be on a standard computer keyboard. In some embodiments, the symbols include the numbers 0-9. The letters 325 maybe screened on the weigh plate 310 or they can be decals that are applied to the weigh plate 310. The symbols also include an arrow 320 that includes one or more labels. In this embodiment, the arrow symbol 320 includes a "VOL" label. In other embodiments, different symbols are included that relate to other functions or features of the scanner 145. In still other embodiments, the symbols (325, 320) are not affixed to the weigh plate 310 but are projected onto the weigh plate 310 using an image projector 335 (as illustrated by broken line 360 in Fig 3). The image projector 335 may include a laser 340 to generate and project different types of symbols ranging from letters of the alphabet to images. The processor 211 can turn the projector 335 on and off and change the projected symbols and their locations on the weigh plate 310.

In the present embodiment, the scanner 145 uses sounds, including tones, to indicate different types of events. The scanner 145 will use one sound to indicate a successful reading of an optical code and a different sound to indicate a failed attempt to read an optical code. An operator may desire to adjust the volume of the sound produced by the scanner 145. To adjust the volume higher, the user places a finger on the arrow 320 and moves the finger toward the "VOL" label to increase the volume of the sound and away from the "VOL" label to decrease the volume of the sound.

The scanner 145 adjusts the volume by detecting that the operator touches the weigh plate 310 in the area of the arrow 320 and that the operator moves the touch point either toward the "VOL" label or away from the "VOL" label. Once these actions are identified, the scanner 145 adjusts the volume of the sound produced by the scanner 145 either up or down by an amount proportional to the distance the touch moves.

The scanner 145 uses a change in weight or force being applied to the weigh plate 310 to determine that the operator could be making a request to the scanner 145. Next the scanner 145 uses the scanner hardware 225 to determine what area of the weigh plate 310 is being touched by an object. The scanner hardware 225 includes an image capture device that captures images of the surface of the weigh plate 310. These images are processed to determine the general type and location of any object in contact with the weigh plate 310. The images are also processed to determine the presence of a bar code which would indicate the object is presented for purchase. In some embodiments, the scanner hardware 225 can determine if the object meets the general requirements to be the operator's finger. If the scanner 145 determines that an object is applying a force to the weigh plate 310, and the object is located on a portion of the arrow 320, and the object is not an item for purchase, then the scanner 145 will determine the operator is making a request and that the request is to adjust the sound volume.

If the operator needs to input one or more letters into the scanner 145, the operator touches one of the letters 325 until an indication is given that the scanner 145 has identified the touched letter. The operator may then touch another letter if necessary. In some embodiments that use the image projector 335, the letter touched by the operator is projected onto the weigh plate 310 at a different location for the operator to see. The scanner 145 detects touched letters or any other symbols using the same method described above to adjust the sound volume.

The operator can also input the equivalent of a single or double mouse click by touching the weigh plate 310 once or twice in an area marked for clicking (not shown).

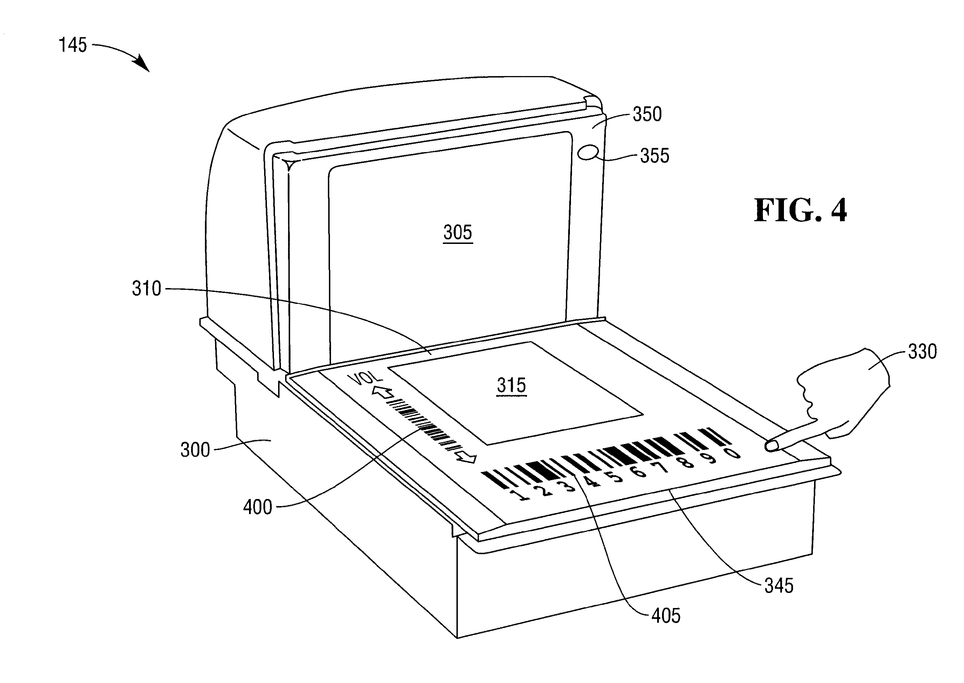

Referring now to Fig. 4, there is provided a high-level drawing illustrating an exemplar embodiment of the scanner and weigh scale 145. In the embodiment depicted in this figure, the scanner hardware 225 includes a laser scanner which, among other functions, is used to determine if an operator is attempting to input information by touching the weigh plate 310 in predetermined locations.

The weigh plate 310 includes symbols (400, 405) that are used by the scale 145 to identify locations on the weigh plate 310. In this embodiment, the symbols are applied to the top surface of the weigh plate 310. In some embodiments, the symbols are applied to the under side of the transparent horizontal scan window 315. This prevents wear or damage to the symbols when contacted by items being scanned.

Symbol 400 is used to set a volume parameter used by the scanner 145 to control the volume of generated audio sounds. The symbol 400 includes bars (similar to a bar code), arrows, and the text "VOL". The bars are scanned by the laser scanner and identified as part of the volume control symbol 400. During normal operation, the scanner 145 continuously scans the surface of the weigh plate 310 and the area above the weigh plate 310 to identify both fixed and transient bar codes (codes that move past the scanner 145). The fixed symbol 400 is always detected unless it is obscured by an object.

If an operator touches the volume control symbol 400, a portion of the bar code is obscured by the operator's finger touching the symbol 400. When the laser scanner determines that not all of the bar code is currently visible, it then determines what portion of the bar code has been obscured from view. At the same time, the weigh scale hardware 220 measures an external force from the operator's finger, which is in contact with the weigh plate 310. The laser scanner also determines if a non-fixed bar code is present which indicates that the object is an item for purchase and not the operator's finger. If the scanner 145 determines that a force is being applied to the weigh plate 310 and that a portion of the symbol 400 is obscured and that no transient bar code is detected, then the scanner 145 will determine the operator is making a request and that the request is to adjust the sound volume.

Successive scans by the laser scanner will determine if a different portion of the symbol 400 becomes obscured and if it does, also determine a direction of movement for the touch. The scanner 145 can also provide feedback to the operator such as an indication that a touch is detected and that the touch has moved. In some embodiments, the scanner 145 generates a tone at the current volume setting when the operator touches the symbol 400. As the user moves the touch, the volume of the generated tone is adjusted up or down based on the direction of movement. When the user lifts the touch, the sound volume for the scanner 145 is set to the last adjusted volume and the tone is turned off.

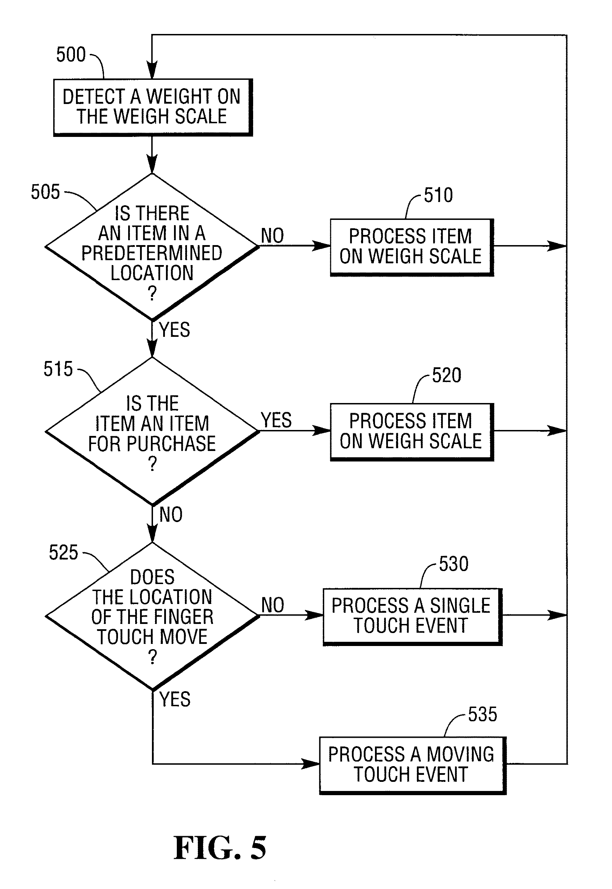

With reference to Fig. 5, there is provided a high-level flow diagram illustrating an exemplar method for detecting and processing touch events for the scanner 145. In step 500, the weigh scale hardware 220 detects that an external force has been applied to the weigh plate 310. This force could be the result of an item placed on the weigh plate 310 that is part of a purchase transaction or it could be the result of the operator's finger pressing on the weigh plate 310.

In step 505, the scanner hardware 225 determines if an item or object is located only at a predetermined location on the weigh plate 310. The weigh plate 310 is within the field of view of the scanner hardware 225 and at least one location on weigh plate 310 is defined to be a predetermined location. In some embodiments, there are multiple predetermined locations. The predetermined location is typically not a location where items for purchase would be placed. The predetermined location is further associated with an input request entered by an operator. Predetermined locations are also marked so that the operator can identify them. If the item is not located in a predetermined location, the item is processed as part of a purchase transaction (step 510).

In step 515, the item is determined to be in a predetermined location and is further scanned to determine the presence of a bar code. If a bar code is found, then the item is determined to be an item for purchase. In some embodiments, the further scanning includes determining physical characteristics of the item (e.g., the general shape and size of the item). If no bar code is detected on the item, the physical characteristics are used to determine if the item is an item for purchase. If it is determined that the item is not an item for purchase, it is assumed that the item is the operator's finger and that the operator is attempting to make a request to the scanner 145.

In step 520, the item is determined to be an item for purchase and is processed as part of a purchase transaction.

In step 525, the item has been determined to be an operator's finger touching the weigh plate 310 at predetermined location. The scanner hardware 225 then determines if the finger moves while still in contact with the weigh plate 310. In some embodiments, the scanner hardware 225 will monitor the location of the finger for a period of time. If the finger does not move during the time period, it is determined that a single touch event is being requested. If the finger is determined to move during the time period, then a moving touch event is being requested.

In step 530, if the finger does not move, a single touch event is processed using the predetermined location of the finger to select which request has been requested by the operator. Some requests may require additional input from the operator which means additional touches are required to complete the request.

In step 535, it is determined that the operator's finger has moved. A moving touch event is processed using the predetermined location first detected to select which moving touch request has been requested by the operator.

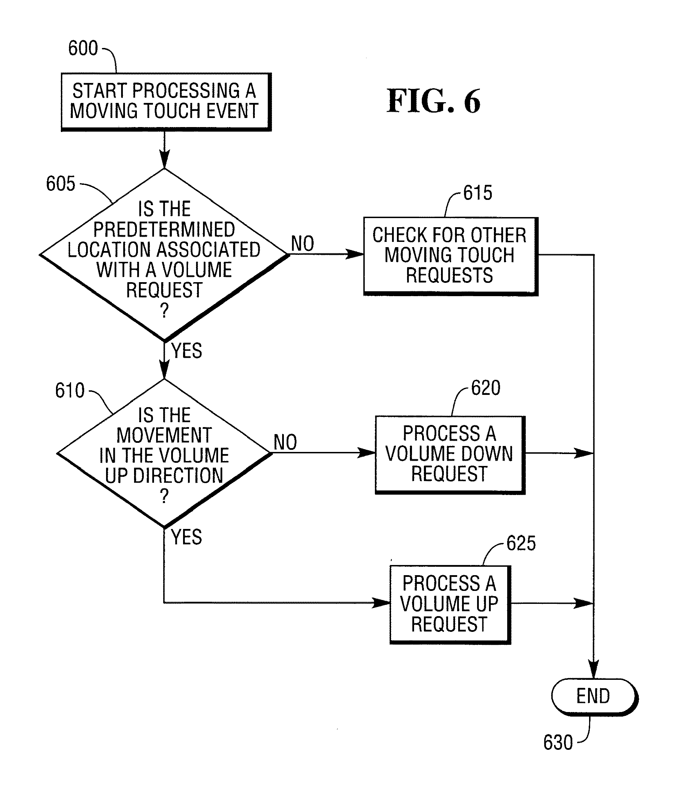

Turning to Fig. 6, there is provided a high-level flow diagram illustrating an exemplar method for processing moving touch events for the scanner 145. This example illustrates processing a request to adjust the volume of audio sound generated by the scanner 145 to communicate with the operator. Other requests are possible.

In step 600, the processing starts when a moving touch event is detected. In step 605, it is determined if the predetermined location is associated with a volume request. As disclosed, each predetermined location is a location on the weigh plate 310 that is associated with an operator input request. Fig. 3 illustrates an arrow 320 on the weigh plate 310 that is associated with a volume input request. In a different implementation, Fig. 4 also illustrates a symbol 400 on the weigh plate 310 that is associated with a volume input request. If the predetermined location is not associated with the volume input request, checks are made to determine what input request is associated with the predetermined location and that input request is performed. (Step 615.)

In step 610, the current location of the finger is determined and used to further determine the direction and distance of movement from the original location. The arrow 320 includes the text "VOL". In this embodiment, movement along the arrow 320 toward the "VOL" text (up direction) will cause the scanner 145 to increase the audio volume and movement along the arrow away from the "VOL" text (down direction) will cause the scanner 145 to decrease the audio volume.

In step 620, the direction of movement is determined to be down, so a volume down request is processed which reduces the current value of a scanner volume parameter. In some embodiments, the change in the volume parameter is related to the distances the finger is moved along the arrow.

In step 625, the direction of movement is determined to be up, so a volume up request is processed which increases the current value of the scanner volume parameter. In some embodiments, the change in the volume parameter is related to the distant the finger is moved along the arrow.

In the step 630, the process ends until the next moving touch event is detected.

The examples disclosed herein are not intended to be the only commands or parameters that can take advantage of this method of input. For example, the sounds or tones used by the scanner 145 to identify an operation may also be modified by an operator using the described invention.

The above embodiments use a scanner and weigh scale 145 combination where the weigh scale detects pressure being applied to the weigh plate 310 as a possible indication that an operator is entering a command by pressing at a location on the weigh plate 310. In other embodiments, the weigh scale is not present and the scanner is used to detect when a predetermined location on the horizontal surface 345 is pressed by detecting the presence of the operator's finger in the predetermined location. In some embodiments, a sustained touch to an obscure area causes the scanner 145 to enter an operator input mode. For example, a touch for 5 seconds to the obscure area would cause the scanner 145 to enter the operator input mode. The time period for the sustained touch could also be adjustable. Once in this mode, item scanning is suspended which makes detecting a touch event simpler because the scanner 145 is not trying to distinguish between a touch event and scanning an item for purchase. Once all commands have been entered, the operator may exit the operator input mode by a sustained touch to a predetermined location.

Although particular reference has been made to an embodiment that includes a POS terminal and examples have been provided illustrating the invention in combination with a POS terminal, certain other embodiments, variations and modifications are also envisioned within the scope of the following claims. For example, there are embodiments where the invention is used in combination with a shipping terminal to identify and weigh items being shipped from a warehouse or other locations. In addition, many other types of input requests are envisioned.

## Claims

1. An optical code scanner (145) comprising:
a scanning device (225) for reading an optical code presented to the optical code scanner (145) and detecting when an object (330) is located at a first predetermined location (320, 325, 400, or 405); and
a computer processor (210) in communication with the scanning device (225) and executing software for
(i) receiving from the scanning device (225) an indication that an object (330) is located at the first predetermined location (320, 325, 400, or 405),
(ii) determining that an input criterion has been satisfied, and
(iii) implementing an input request associated with the first predetermined location (320, 325, 400, or 405).

2. An optical code scanner according to claim 1, wherein the scanner (145) further comprises a weigh scale (220) operable to determine a value for the weight of an item placed on the weigh scale (220) or for a force applied to the weigh scale (220);
where the software is further operable for receiving from the weigh scale (145) a value for a force applied to the weigh scale (220), and
wherein the input criterion is satisfied when an indication that an object (330) is located at the first predetermined location (320, 325, 400, or 405) is received while the force is being applied to the weigh scale (220).

3. An optical code scanner according to claim 2, wherein the weigh scale (220) includes a weigh plate (310) which includes a first visual indicator (320 or 400) where the first predetermined location is proximate to a first portion of the first visual indicator (320 or 400).

4. An optical code scanner according to claim 3, wherein the first visual indicator (400) includes visual markings applied to the weigh plate (310).

5. An optical code scanner according to claim 3, wherein the scanner includes an image projector (335) and the first visual indicator includes visual symbols (325) that are projected onto the weigh plate (310) by the image projector (335).

6. An optical code scanner according to any of claims 2 to 5, wherein the software is operable for
receiving from the scanning device (225) an indication that the object (330) was detected in a second predetermined location while receiving a value from the weigh scale (220) indicating that a force is still being applied to the weigh plate (310); and
wherein implementing the input request further includes modifying a volume parameter, where the volume parameter determines the volume for audio sounds produced by the scanner (145) and where the magnitude of the modification to the volume parameter is related to the distance between the first and second predetermined locations.

7. An optical code scanner according to any preceding claim, wherein implementing the input request includes modifying a parameter of the scanner (145) to control a feature of the scanner (145).

8. An optical code scanner according to any preceding claim, wherein determining that an input criterion has been satisfied includes determining that the object (330) has no detected optical code.

9. An optical code scanner according to claim 1, wherein the software is operable for
determining that an input criterion has been satisfied by determining that the object (330) has been located in the first predetermined location for a predefined time period, and
implementing an input request associated with the first predetermined location by entering an operator input mode.

10. A point of sale terminal (100) including the optical code scanner (145) of any preceding claim.

11. A method of operating an optical code scanner (145) to implement an input request, the method comprising the steps of:
(i) receiving from a scanning device (225) an indication that an object (330) is located at a first predetermined location,
(ii) determining that an input criterion has been satisfied, and
(iii) implementing the input request associated with the first predetermined location.

12. A method of operating an optical code scanner according to claim 11, wherein the method further comprises the step of
(ii-1) receiving from a weigh scale (220) a value for a force applied to the weigh scale (220); and
wherein the step of (ii) determining that an input criterion has been satisfied, includes determining that steps (i) and (ii-1) occurred simultaneously.

13. A method of operating an optical code scanner according to claim 11 or 12, wherein the step of (ii) determining that an input criterion has been satisfied, includes: (a) determining that steps (i) and (ii-1) occurred simultaneously, and (b) determining that no optical code is detected on the object (330).

14. A method of operating an optical code scanner according to any of claims 11 to 13, wherein the step (iii) implementing the input request comprises modifying a parameter that controls a feature or function of the optical code scanner (145).

15. An optical code scanner (145) comprising:
a weigh scale (220) where the scale (220) determines a value for the weight of an item placed on the scale (220) or for a force applied to the scale (220);
a scanning device (225) where the device (225) reads an optical code presented to the optical code scanner (145) and detects when an object (330) is located at a first predetermined location;
a computer memory (212) that stores software and data;
a computer processor (211) in communication with the computer memory (212), the weigh scale (220), and the scanning device (225); and where the software, when executed by the processor (211), implements the features and functions of the optical code scanner (145) including (i) receiving from the weigh scale (220) a value for a force applied to the scale (220), (ii) receiving from the scanning device (225) an indication that an object (330) is located in the first predetermined location while the force is being applied, (iii) determining that a first input request has been made after receiving the indication, and (iv) implementing the input request.

## Amended claims

### Amended claims in accordance with Rule 137(2) EPC.

**1.** An optical code scanner (145) comprising:
a scanning device (225) for reading an optical code presented to the optical code scanner (145) and detecting when an object (330) is located at a first predetermined location (320, 325, 400, or 405) having an associated input request; and
a computer processor (210) in communication with the scanning device (225) and executing software for
(i) receiving from the scanning device (225) an indication that an object (330) is located at the first predetermined location (320, 325, 400, or 405),
(ii) determining from the scanning device (225) that the object is an operator's finger and that the operator is making the input request associated with the first predetermined location (320, 325, 400, or 405), and
(iii) implementing the input request associated with the first predetermined location (320, 325, 400, or 405).

**2.** An optical code scanner according to claim 1, wherein the scanner (145) further comprises a weigh scale (220) operable to determine a value for the weight of an item placed on the weigh scale (220) or for a force applied to the weigh scale (220);
where the software is further operable for receiving from the weigh scale (145) a value for a force applied to the weigh scale (220).

**3.** An optical code scanner according to claim 2, wherein the weigh scale (220) includes a weigh plate (310) which includes a first visual indicator (320 or 400) where the first predetermined location is proximate to a first portion of the first visual indicator (320 or 400).

**4.** An optical code scanner according to claim 3, wherein the first visual indicator (400) includes visual markings applied to the weigh plate (310).

**5.** An optical code scanner according to claim 3, wherein the scanner includes an image projector (335) and the first visual indicator includes visual symbols (325) that are projected onto the weigh plate (310) by the image projector (335).

**6.** An optical code scanner according to any of claims 2 to 5, wherein the software is operable for
receiving from the scanning device (225) an indication that the object (330) was detected in a second predetermined location while receiving a value from the weigh scale (220) indicating that a force is still being applied to the weigh plate (310); and
wherein implementing the input request further includes modifying a volume parameter, where the volume parameter determines the volume for audio sounds produced by the scanner (145) and where the magnitude of the modification to the volume parameter is related to the distance between the first and second predetermined locations.

**7.** An optical code scanner according to any preceding claim, wherein implementing the input request includes modifying a parameter of the scanner (145) to control a feature of the scanner (145).

**8.** An optical code scanner according to any preceding claim, wherein determining that an input criterion has been satisfied includes determining that the object (330) has no detected optical code.

**9.** A point of sale terminal (100) including the optical code scanner (145) of any preceding claim.

**10.** A method of operating an optical code scanner (145) to implement an input request associated with a first predetermined location, the method comprising the steps of:
(i) receiving from a scanning device (225) an indication that an object (330) is located at the first predetermined location,
(ii) determining that the object is an operator's finger and that the operator is making the request associated with the first predetermined location, and
(iii) implementing the input request associated with the first predetermined location.

**11.** A method of operating an optical code scanner according to claim 10, wherein the method further comprises the step of
(ii-1 ) receiving from a weigh scale (220) a value for a force applied to the weigh scale (220).

**12.** A method of operating an optical code scanner according to claim 10 or 12, wherein the step of (ii) determining that the object is an operator's finger and that the operator is making a request associated with the first predetermined location, includes: (a) determining that steps (i) and (ii-1) occurred simultaneously, and (b) determining that no optical code is detected on the object (330).

**13.** A method of operating an optical code scanner according to any of claims 11 to 13, wherein the step (iii) implementing the input request comprises modifying a parameter that controls a feature or function of the optical code scanner (145).
